Europäisches Patentamt

European Patent Office

Office européen des brevets

(11) Publication number: **0 112 074**
**B1**

(12) **EUROPEAN PATENT SPECIFICATION**

(45) Date of publication of patent specification: 06.05.87

(51) Int. Cl.⁴: **B 29 C 65/06**

(21) Application number: 83307138.4

(22) Date of filing: 22.11.83

(54) Friction welded fastening system, fastener and application tool.

(30) Priority: 06.12.82 US 446899
31.01.83 US 462270

(43) Date of publication of application:
27.06.84 Bulletin 84/26

(45) Publication of the grant of the patent:
06.05.87 Bulletin 87/19

(84) Designated Contracting States:
DE FR GB IT SE

(56) References cited:
GB-A-1 058 534
GB-A-2 061 183
US-A-3 078 912
US-A-3 580 793
US-A-4 090 898

(73) Proprietor: ILLINOIS TOOL WORKS INC.
8501 West Higgins Road
Chicago Illinois 60631 (US)

(72) Inventor: Van Cearlock, Steven
4S004 Downen Road
Batavia Illinois 60510 (US)
Inventor: Kunos, Gene Scott
365 Wabash Avenue
Elgin Illinois 60120 (US)
Inventor: Peterson, Francis Clair
1426 Seventh Court
St-Charles Illinois 60174 (US)

(74) Representative: Rackham, Stephen Neil
GILL JENNINGS & EVERY 53-64 Chancery Lane
London WC2A 1HN (GB)

Courier Press, Leamington Spa, England.

# Description

The invention relates to a system for attaching fasteners to a workpiece and for fastening articles together. In particular the invention pertains to a system for friction or spin welding thermoplastic fasteners to a workpiece, and to components of such a system.

One such friction welded fastener is disclosed in GB—A—2061183 and comprises a primary fastening element, a base carrying the element, the base having a base surface arranged to be fused to the workpiece by the heat of friction generated by the application of rotational and axial forces applied to the fastener when its base surface is in contact with the workpiece. The fastener is driven by a rotating tool such as a conventional electric drill. The interface between the fastener and the workpiece is frictionally heated by applying contact pressure while at the same time rotating the fastener and workpiece relative to one another. When the interface between the two members has achieved a molten state, or at least when the portion of the thermoplastic fastener adjacent the workpiece has melted, the rotation is stopped while the contact pressure is maintained for a time sufficient to allow the interface to solidify. The length of time required to achieve this molten state depends upon a variety of factors including fastener material, workpiece material, the size and configuration of the interface, the amount of contact pressure, the speed of rotation, the thermal dissipation characteristics of the connection, the dynamic friction characteristics of the interface, and other indeterminate factors. After the molten state at the interface has been achieved, it is important to continue to apply contact pressure until the interface returns to the solid state. The time required in this step again varies with the materials involved.

Typical problems encountered in friction welding include insufficient amounts of interface fusion, overheating the interface to the point where combustion takes place, and malformation of the interface due to continued rotation of the fastener during the transition from the molten to the solid state.

US—A—4090898 describes an apparatus for spin welding plastics fittings onto tubing and includes means to urge the fitting and tubing together and rotate one with respect to the other. This also describes how the fitting and tubing continue to be held together after their mutual rotation is completed.

According to a first aspect of this invention a friction welded fastening system comprising a thermoplastic fastener arranged to be fused to a workpiece, and an application tool for rotating and applying axial pressure to the fastener is characterised by at least one protrusion carried by the fastener and at least one projection on the tool, one of the protrusion on the tool engaging one projection on the fastener to rotate the fastener until a molten interface condition of the base surface has been reached, at which point the protrusion yields under the applied load from the projection of the tool and the fastener stops rotating.

According to a second aspect of this invention a fastener for use in such a system includes yielding drive means formed integrally with the fastener to transmit rotation to the fastener and automatically to limit the melting of the fastener by yielding under the applied load when a molten interface condition of the base surface of the fastener has been reached.

Preferably the application tool comprises at least one projection for applying a torque to the fastener, and means rotationally independent of the at least one projection, for applying axial pressure to the fastener to urge a base surface of the fastener into contact with a workpiece both during and after rotation of the fastener.

The present invention allows an installer to apply a continuous contact pressure to the fastener and the workpiece, while at the same time automatically stopping rotation of the fastener when it has melted to the required extent. The system also eliminates the need for the installer to judge when the required molten state has been achieved.

A particular example of a system and examples of tools and fasteners in accordance with this invention will now be described with reference to the accompanying drawings; in which:—

Figure 1 is a partially sectional side elevation of a tool and fastener;

Figure 2 is an underplan of a tool;

Figure 3 is a plan of a fastener;

Figure 4 is a cross-section taken along the line 4—4 shown in Figure 3; and,

Figure 5 is a partly sectional side elevation of another tool.

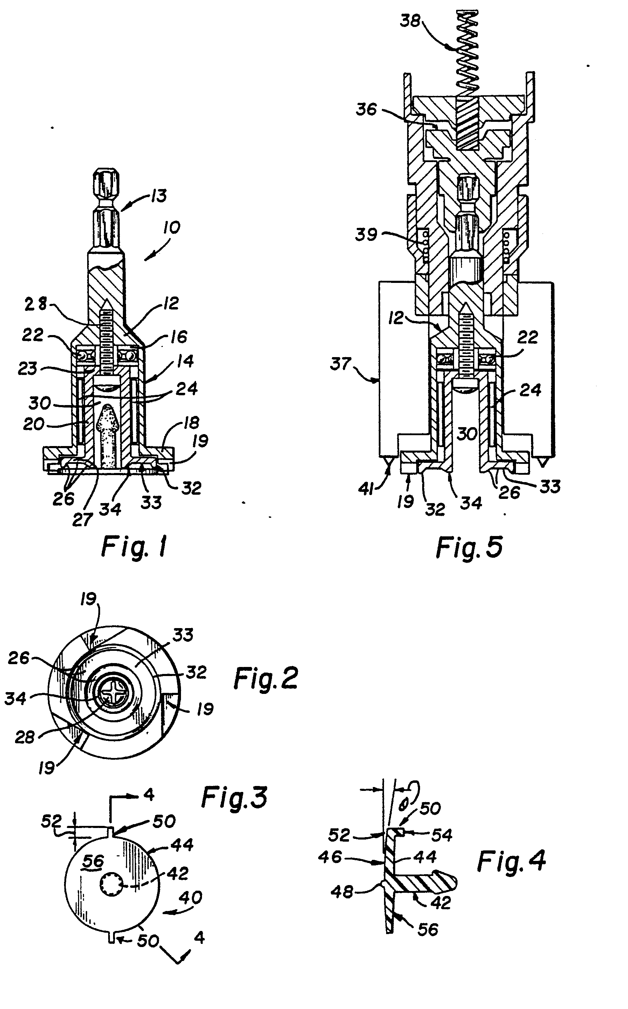

Referring to the drawings, Figure 1 shows a tool 10 with an outer sleeve member 12 and an upper end portion 13 adapted to be held by a power tool (not shown), a mid-section 14 and a fastener driving end flange 18. Within the mid-section 14 there is an inner sleeve 20 connected to the outer sleeve member 12 by bolt 28. The inner sleeve 20 has a flange 27 at one end thereof. A thrust bearing 22 lies between a bearing surface 16 of the outer sleeve member 12 and the upper end 23 of the inner sleeve 27. Rolling bearings 24 separate the sleeve portions of the inner and outer sleeve members. The inner sleeve 20 has a flange 27 with a contoured pressure surface 26 on its underside. The pressure surface 26 is comprised of an outer downwardly depending inner ring 34. The outer sleeve member 12 has a fastener driving end flange 18 with downwardly depending fastener engaging projections 19 on the periphery of the end flange 18. The inner sleeve 20 has an opening 30 adapted to receive the shank of a fastener.

The fastener 40 has a generally stud-like primary fastening element 42 integrally formed with a base 44. The base 44 has a generally tapered lower surface 46 adapted to be fused to a workpiece. There is a central protrusion 48 extending in a direction opposite that of the primary fastening element 42. Peripheral protrusions 50 have a radial portion 52 and an axial portion 54 which extends generally in the direction of the primary fastening element 42. The upper surface 56 of the base 44 is adapted to abut the flange 27 of the inner sleeve 20 of the tool shown in Figure 1. The peripheral protrusions 50 are adapted to engage the projections 19 of the tool shown in Figure 1.

Obviously, the invention is not limited to fasteners having studs; in fact, any of a variety of fasteners could be used including female fasteners with only slight modifications to the tool 10 particularly in the size of the opening 30.

The operation of the system of the present invention is as follows. The primary fastening element 42 is inserted into the opening 30 of the inner sleeve 20. The pripheral protrusions 50 are fitted into spaces between the projections 19 such that the inner ring 34 and outer ring 32 about portions of the upper surface 56. When the fastener is placed up against a workpiece rotation at the upper end portion 13 of the tool 10 is transmitted to the fastener 40 almost exclusively by the interference between the peripheral protrusions 50 and the projections 19 on the end flange 18. Axial pressure is applied to the fastener at the upper surface 56. As axial pressure is applied to the fastener during rotation of the fastener, friction causes heat to be generated at the lower surface 46 of the fastener. Because of the taper indicated by the angle θ shown in Figure 4, heat begins to build up at the centre of the lower surface 46. The heat causes the lower surface 46 to melt. As the melting progresses gradually toward the periphery of the surface 46, the strength of the radial portion 52 of the protrusion 50 is drastically reduced. Eventually, the protrusion 50 is sheared off and rotation of the fastener stops. It has been found that some increase in torque occurs with the melting of the interface, however, the main factor contributing to the failure of the protrusions 50 is the weakness due to frictional heat. At the time that the protrusion 50 fails rotational torque transmitting forces from the projection 19 are no longer transferred to the fastener. However, because the inner sleeve 20 is rotationally independent of the outer sleeve member 12 through bearings 22 and 24, axial pressure between the fastener and the workpiece can be maintained to ensure proper fusion therebetween.

Other features of the tool include the following. As the outer sleeve 12 continues to rotate while the inner sleeve 20 and the fastener are stopping, the projections 19 tend to clean off any material which may have been extruded out from between the fastener and the workpiece. Extrusion, however, is minimized by the contoured surface 26 because the outer ring 32 of the flange 27 together with the recessed planar portion 33 tend to contain and control the outward flow of molten material. The contoured surface 26 therefore not only enhances the appearance of the friction welded connection, but also helps to make a stronger connection by preventing the escape of molten material.

It should be noted that the inertial force of the substantially massive outer sleeve member 12 will not be transmitted to the fastener once the peripheral protrusion 50 are severed. This is significant because the solidification of the melted fastener/workpiece interface can occur rapidly, and any excessive rotation of the fastener during the solidification of the interface can cause malformation of the bond between the fastener and the workpiece.

Obviously, transmission of the inertial forces of the driving assembly to the fastener could be avoided by employing some braking mechanism, but such a solution would be cumbersome at best. And, there are other alternatives for disconnecting the drive assembly for the fastener to avoid transmission of the inertial forces. However, since there is very little if any displacement of the fastener relative to the workpiece during the friction welding operation described, the rather difficult task of displacing at least a portion of the driving assembly would be required. Displacement of the fastener is also impractical because often the workpiece to which the fastener is attached is relatively thin material and displacement of the fastener would therefore cause damage to the workpiece.

The preferred embodiment of the present invention not only avoids the above problems, but also precludes the need for judgement by installer as to when to stop rotating the fastener. Because the protrusions 50 shear at a predetermined fusion condition, and because the tool employs no other torque transmitting means, the overheating of the fastener/workpiece interface is precluded.

Typically a fastener will be provided with two peripheral protrusions 50 and the tool 10 will have three torque transmitting projections 19. This means that torque will be transmitted to the fastener by only one protrusion 50, and the size and melting point of the protrusion can be designed to shear it off at an optimal time depending upon the size of the base 44, the material of the fastener, the axial pressure to be applied during installation, the speed of rotation of the fastener and the myriad other considerations known in the friction welding art. Because the fastener is driven by a single protrusion, a fastener having a plurality of protrusions can still be used if one of the protrusions should happen to be damaged.

Figure 5 shows an alternative embodiment of a tool. The tool in Figure 5 contains the entire tool shown in Figure 1, and has additional features as follows. A stabilizing sleeve 37 surrounds the outer sleeve member 12, the sleeve 37 is springloaded with a first spring 39. The sleeve 37 is freely rotatable about the tool 10. The sleeve 37 has points 41 to assist in locating the fastener on the workpiece. The tool of Figure 5 includes clutch surfaces 36 held apart by a spring 38 which ensures that a predetermined contact pressure is applied to the fastener before rotation of the fastener 10 occurs. The advantage of the embodiment shown in Figure 5 is that a predetermined level and distribution of pressure can be assured with the tool, and again judgement input by the installer is reduced.

It has also been discovered that by including fibrous substances such as glass or metal fibres in the composition of the material forming the base 44 of any of the above embodiments can enhance the friction generating characteristics of the base 44. The use of such materials in the composition of the material forming the base can shorten the time needed to achieve a molten interface between the fastener and a workpiece.

It has also been found that the system of the present invention is applicable in situations where the workpiece to which the fastener is spin welded is other then thermoplastic material. Bonding of various capacities have been achieved to such materials as concrete and wood.

## Claims

1. A friction welded fastening system comprising a thermoplastic fastener (40) arranged to be fused to a workpiece, the fastener (40) having a primary fastening element (42), a base (44) carrying the element (42), the base (44) having a base surface (46) arranged to be fused to the workpiece by the heat of friction generated by the application of rotational and axial forces applied to the fastener when its base surface (46) is in contact with the workpiece; and an application tool (10) for rotating and applying axial pressure to the fastener (40); characterised by at least one protrusion (50) carried by the fastener and at least one projection (19) on the tool, one of the projection (19) on the tool (10) engaging one protrusion (50) on the fastener (40) to rotate the fastener (40) until a molten interface condition of the base surface (46) has been reached, at which point the protrusion (50) yields under the applied load from the projection (19) of the tool and the fastener (40) stops rotating.

2. A thermoplastic fastener for use in a system according to claim 1, comprising a fastening element (42) and a base (44) carrying the element and having a surface (46) fusible with a workpiece, characterised by yielding drive means (50) formed integrally with the fastener (40) to transmit rotation to the fastener (40) and automatically to limit the melting of the fastener (40) by yielding under the applied load when a molten interface condition of the base surface of the fastener (40) has been reached.

3. A fastener according to claim 2, in which the yielding drive means includes at least one protrusion (50) formed integrally with the base (44) and extending outwards from its outer periphery.

4. A fastener according to claim 2 or 3, in which the surface (46) of the base (44) is domed.

5. A fastener according to claims 2, 3 or 4, which comprises a first member (61) including the base (44) and a second member (62) including the fastening element (42), and means (64, 65) to secure the first member (61) to the second member (62) whilst permitting the second member (62) to be moved laterally with respect to the first member (61).

6. A fastener according to claim 2, 3, 4 or 5, which contains integrally moulded fibrous material to promote the generation of heat of friction between the base (44) and the workpiece.

7. A fastening system according to claim 1, in which the application tool comprises at least one projection (19) for applying a torque to the fastener (40), and means (20) rotationally independent of the at least one projection (19), for applying axial pressure to the fastener to urge a base surface (46) of the fastener (40) into contact with a workpiece both during and after rotation of the fastener (40).

8. A fastening system according to claim 7, in which the application tool includes a load-sensitive switch (36, 38) which begins rotation of the at least one projection (19) only when a predetermined axial pressure is applied to the fastener (40).

9. A fastening system according to claims 7 or 8, in which the means (20) for applying an axial pressure include a flange (27) at one end of an inner sleeve (20), the flange (27) having a contoured surface (26, 32, 34) for transmitting the axial pressure to the fastener (40).

## Patentansprüche

1. Reibungsverschweißtes Befestigungssystem mit einem thermoplastischen Befestiger (40), der zum Verschmelzen mit einem Werkstück angeordnet ist und ein primäres Befestigungselement (42, eine das Element (42) tragende Basis (44) aufweist, deren Basisoberfläche (46) so angeordnet ist, daß sie durch die durch das Aufbringen von Dreh- und Axialkräften auf den Befestiger erzeugte Reibungswärme mit dem Werkstück verschmolzen wird, wenn ihre Basisoberfläche (46) sich in Berührung mit dem Werkstück befindet, und mit einem Aufbringewerkzeug (10) zum Drehen des Befestigers (40) und zum Aufbringen eines axialen Druckes auf ihn, gekennzeichnet durch wenigstens einen von dem Befestiger getragenen Vorsprung (50) und wenigstens einen Vorsprung (19) auf dem Werkzeug, wobei einer der Vorsprünge (19) auf dem Werkzeug (10) einen Vorsprung (50) auf dem Befestiger (40) erfaßt, um den Befestiger (40) zu drehen, bis bei der Basisoberfläche (46) der Zustand einer geschmolzenen Grenzfläche erreicht ist, an welchem Punkt der Vorsprung (50) unter der von dem Vorsprung (19) des Werkzeugs aufgebrachten Last nachgibt und der Befestiger (40) aufhört, sich zu drehen.

2. Thermoplastischer Befestiger zur Verwendung in einem System nach Anspruch 1, mit einem Befestigungselement (42) und einer Basis (44), die das Element trägt und eine Oberfläche (46) aufweist, die mit einem Werkstück verschmelzbar ist, gekennzeichnet durch nachgiebige Antriebsmittel (50), die einstückig mit dem Befestiger (40) ausgebildet sind, um eine Drehbewegung auf den Befestiger (40) zu übertragen und automatisch das Schmelzen des Befestigers (40) durch Nachgeben unter der aufgebrachten Last zu begrenzen, wenn bei der Basisoberfläche des Befestigers (40) der Zustand einer geschmolzenen Grenzfläche erreicht ist.

3. Befestiger nach Anspruch 2, dadurch gekennzeichnet, daß die nachgiebige Antriebseinrichtung wenigstens einen Vorsprung (50) enthält, der einstückig mit der Basis (44) ausgebildet ist und sich von ihrem Außenumfang nach außen erstreckt.

4. Befestiger nach Anspruch 2 oder 3, bei welchem die Oberfläche (46) der Basis (44) gewölbt ist.

5. Befestiger nach Anspruch 2, 3 oder 4, welcher einen ersten Körper (61) aufweist, der die Basis (44) enthält, und einen zweiten Körper (62), der das Befestigungselement (42) enthält, sowie Einrichtungen (64, 65) zur Befestigung des ersten Körpers (61) einem zweiten Körper (62) bei Zulassung einer Seitwärtsbewegung des zweiten Körpers (62) mit Bezung auf den ersten Körper (61).

6. Befestiger nach Anspruch 2, 3, 4 oder 5, welcher einstückig gußgeformtes Fasermaterial enthält, um die Erzeugung von Rinbungswärme zwischen der Basis (44) und dem Werkstück zu begünstigen.

7. Befestigungssystem nach Anspruch 1, in welchem das Aufbringewerkzeug wenigstens einen Vorsprung (19) zum Aufbringen eines Drehmoments auf dem Befestiger (40) enthält, sowie eine Enrichtung (20), die von dem wenigstens einen Vorsprung (19) unabhängig drehbar ist, zum Aufbringen eines axialen Drukes auf den Befestiger, um die Basisoberfläche (46) des Befestigers (40) sowohl während als auch dem Drehen des Befestigers (40) in eine Berührung mit einem Werkstück hineinzudrücken.

8. Befestigungssystem nach Anspruch 7, bei welchem das Aufbringewerkzeug einen lastempfindlichen Schalter (36, 38) enthält. welcher eine Drehbewegung des wenigstens einen Vorsprungs (19) nur dann deginnt, wenn ein vorgegebener Axialdruck auf den Befestiger (40) aufgebracht wird.

9. Befestigunssystem nach Anspruch 7 oder 8, bei welchem die Einrichtung (20) zum Aufbringen eines Axialdruckes einen Flansch (27) an einem Ende einer inneren Hülse (20) enthält, der eine konturierte Oberfläche (26, 32, 34) zur Übertragung des Axialdruckes auf den Befestiger (40) aufweist.

**Revendications**

1. Système de fixation soudée par friction comprenant un organe de fixation (40) en matière thermoplastique agencé pour être fusionné à une pièce, l'organe de fixation (40) comportant un élément de fixation primaire (42), une base (44) portant l'élément (42), la base (44) présentant une surface de base (46) agencée de façon à être fusionnée à la pièce par la chaleur de la friction engendrée par des forces de rotation et axiale appliquées à l'organe de fixation lorsque sa surface de base (46) est en contact avec la pièce; et un outil de pose (10) destiné à faire tourner et à appliquer une pression axiale à l'organe de fixation (40); caractérisé par au moins une protubérance (50) portée par l'organe de fixation et au moins une saillie (19) située sur l'outil, l'une des saillies (19) de l'outil (10) étant enchlenchée avec une protubérance (50) de l'organe de fixation (40) pour faire tourner l'organe de fixation (40) jusqu'a ce qu'un état d'interface fondue à la surface de base (46) ait été atteint, point auguel la protubérance (50) cède sous la charge appliquée par la saillie (19) de l'outil et l'organe de fixation (40) s'arrête de tourner.

2. Organe de fixation en matière thermoplastique à utiliser dans un système selon la revendication 1, comprenant un élément de fixation (42) et une base (44) portant l'élément et présentant une surface (46) pouvant être fusionnée à une pièce, caractérisé par des moyens (50) d'entraînement pouvant céder, réalisés d'une seule pièce avec l'organe de fixation (40) afin de transmettre une rotation à l'organe de fixation (40) et à limiter automatiquement la fusion de l'organe de fixation (40) en cédant sous la charge appliquée lorsqu'un état d'interface fondue de la surface de base de l'organe de fixation (40) a été atteint.

3. Organe de fixation selon la revendication 2, dans lequel les moyens d'entraînement pouvant céder comprennent au moins une protubérance (50) réalisée d'une seule pièce avec la base (44) et s'étendant vers l'extérieur de sa périphérie extérieure.

4. Organe de fixation selon la revendication 2 ou 3, dans lequel la surface (46) de la base (44) est bombée.

5. Organe de fixation selon les revendications 2, 3 ou 4, qui comprend un premier élément (61) incluant la base (44) et un second élément (62) incluant l'élément de fixation (42), et des moyens (64, 65) destinés à fixer le premier élément (61) au second élément (62) tout en permettant au second élément (62) d'être déplacé latéralement par rapport au premier élément (61).

6. Organe de fixation selon la revendication 2, 3, 4 ou 5, qui contient, de moulage, une matière fibreuse destinée à favoriser la génération de chaleur de friction entre la base (44) et la pièce.

7. Système de fixation selon la revendication 1, dans lequel l'outil de pose comprend au moins une saillie (19) destinée à appliquer un couple à l'organe de fixation (40), et des moyens (20) pouvant tourner indépendamment de la saillie (19), destinés à appliquer une pression axiale à l'organe de fixation pour repousser une surface de base (46) de l'organe de fixation (40) en contact avec une pièce à la fois pendant et après la rotation de l'organe de fixation (40).

8. Système de fixation selon la revendicaton 7, dans lequel l'outil de pose comprend un commutateur (36, 38) sensible à la charge, qui amorce la rotation de la saillie (19) uniquement lorsqu'une pression axiale prédéterminée est appliquée à l'organe de fixation (40).

9. Système de fixation selon les revendications 7 ou 8, dans lequel les moyens (20) destinés à appliquer une pression axiale comprennent une collerette (27) située à une extrémité d'un manchon intérieur (20), la collerette (27) ayant une surface profilée (26, 32 34) destinée à transmettre la pression axiale à l'organe de fixation (40).

Fig. 1

Fig. 5

Fig. 2

Fig. 3

Fig. 4